# EUROPEAN PATENT APPLICATION

(11) **EP 4 640 760 A1**
(43) Date of publication of application: **29.10.2025**
(21) Application number: 24747341.6
(22) Date of filing: 24.01.2024
(51) Int. Cl.: C08L 33/14, C08F 20/28

(54) **AQUEOUS SOLUTION OF POLYMER, MONOMER COMPOSITION AND METHOD FOR PRODUCING SAME, AND METHOD FOR PRODUCING POLYMER**

(30) Priority: 25.01.2023 JP 2023009362
(71) Applicant: Nippon Shokubai Co., Ltd., Osaka-shi, Osaka 541-0043 (JP)
(72) Inventor: NAKATA Yoshitomo, Suita-shi, Osaka 564-0034 (JP)
(74) Representative: Hoffmann Eitle
(86) International application number: PCT/JP2024/002106
(87) International publication number: WO 2024/158017

(57) **Abstract**

The present disclosure provides an aqueous solution including a polymer containing 50 mol% or more of a structural unit derived from (meth)acrylate with two or more hydroxyl groups and having a weight average molecular weight of 300000 or more at a concentration of 35 mass% or less, wherein when the polymer is dissolved in water to form a 2 mass% aqueous solution, the aqueous solution has a pH of 3.5 or more.

## Description

### Technical Field

The present disclosure relates to an aqueous solution of a polymer, a monomer composition, a method for producing the monomer composition, and a method for producing a polymer.

### Background Art

Polymers having a structural unit derived from (meth)acrylate are expected to be applied to applications such as coating agents and thickeners. Patent Literature 1 describes that a copolymer containing a structural unit derived from glycerol (meth)acrylate and a structural unit derived from a polymerizable double-bonded monomer having a carboxy group in a predetermined amount is used as a coating agent for medical devices. Patent Literature 2 describes that a polymer having a structural unit derived from (meth)acrylate is used as a thickener for cosmetics.

### Citation List

### Patent Literature

Patent Literature 1: WO 2020/152969 A
Patent Literature 2: Japanese Unexamined Patent Publication No. 2000-119131

### Summary of Invention

### Technical Problem

Storing such a polymer as an aqueous solution has advantages such as improvement in handleability and simplification of transportation. Therefore, the storage stability of an aqueous solution of a polymer is important. However, the present inventors have found that when a polymer having a structural unit derived from (meth)acrylate is stored in the form of an aqueous solution, the weight average molecular weight of the polymer increases with an increase in storage period, causing a problem that the aqueous solution is thickened.

In order to solve such a problem, an object of the present disclosure is to provide an aqueous solution of a polymer with high storage stability capable of stably storing a polymer having a structural unit derived from (meth)acrylate for a long period of time, a monomer composition for obtaining such an aqueous solution, a method for producing the monomer composition, and a method for producing the polymer.

### Solution to Problem

The present disclosure provides an aqueous solution according to [1] to [4] and [9] below, a monomer composition according to [5] or [6], a method for producing a monomer composition according to [7], and a method for producing a polymer according to [8].
[1] An aqueous solution comprising: a polymer containing 50 mol% or more of a structural unit derived from (meth)acrylate with two or more hydroxyl groups and having a weight average molecular weight of 300000 or more at a concentration of 35 mass% or less, wherein when the polymer is dissolved in water to form a 2 mass% aqueous solution, the aqueous solution has a pH of 3.5 or more.
[2] The aqueous solution according to [1], wherein the structural unit derived from (meth)acrylate includes a structural unit derived from glycerol mono(meth)acrylate.
[3] The aqueous solution according to [1] or [2], wherein the polymer is a homopolymer of a structural unit derived from the glycerol mono(meth)acrylate.
[4] The aqueous solution according to any one of [1] to [3], wherein the polymer has a weight average molecular weight of 400000 to 2000000.
[5] A monomer composition comprising: 50 mol% or more of glycerol mono(meth)acrylate, wherein a content of acrylic acid is less than 200 ppm by mass based on a total amount of glycerol mono(meth)acrylate.
[6] The monomer composition according to [5], wherein a peak area of glyceryl di(meth)acrylate determined by HPLC measurement at a detection wavelength of 210 nm is less than 1% based on a peak area of the glycerol mono(meth)acrylate determined by HPLC measurement.
[7] A method for producing the monomer composition according to [5] or [6], the method comprising: bringing a composition containing glycerol mono(meth)acrylate into contact with at least one selected from the group consisting of a basic ion exchange resin and a chelating resin to reduce the content of the acrylic acid.
[8] A method for producing a polymer, the method comprising: polymerizing the monomer composition according to [5] or [6] in an aqueous solvent to obtain a polymer.
[9] The aqueous solution according to any one of [1] to [4], comprising a polymer obtained by the production method according to [8].

### Advantageous Effects of Invention

According to the present disclosure, it is possible to provide an aqueous solution of a polymer with high storage stability capable of stably storing a polymer having a structural unit derived from (meth)acrylate for a long period of time, a monomer composition for obtaining such an aqueous solution, a method for producing the monomer composition, and a method for producing the polymer.

### Description of Embodiments

Hereinafter, embodiments of the present disclosure will be described. However, the following embodiments are examples for describing the present disclosure, and are not intended to limit the present disclosure to the following contents. The upper limit value or the lower limit value of a numerical range specified in the present specification may be replaced with any value shown in Examples. In addition, the upper limit value and the lower limit value described individually may be arbitrarily combined. Materials or components exemplified in the present specification can be used alone or in combination with two or more thereof unless otherwise specified. As used herein, the term "(meth) acrylic acid" means acrylic acid or methacrylic acid. The same applies to similar expressions such as "(meth)acrylate".

An aqueous solution according to the present embodiment is an aqueous solution of a polymer, and a concentration of the polymer is 35 mass% or less. From the viewpoint of enhancing the storage stability of the aqueous solution, the concentration of the polymer may be 30 mass% or less or 20 mass% or less. When the concentration of the polymer exceeds 35 mass%, the polymer reacts in the aqueous solution during storage, easily causing an increase in a weight average molecular weight of the polymer in the aqueous solution and thickening of the aqueous solution. The lower limit of the concentration of the polymer is not particularly limited, but may be, for example, 5 mass% or more from the viewpoint of improving the handleability.

The aqueous solution means a solution of water or a solution of mixed solvent of water and a hydrophilic organic solvent, the mixed solvent having a water content of 50 mass% or more. Examples of the hydrophilic organic solvent include monohydric alcohols such as methanol, ethanol, isopropyl alcohol, n-propyl alcohol, and allyl alcohol, polyhydric alcohols such as ethylene glycol, propylene glycol, butanediol, pentanediol, hexanediol, heptanediol, and dipropylene glycol, ketones such as acetone, methyl ethyl ketone, and methyl propyl ketone, aliphatic organic acid alkyl esters such as methyl formate, ethyl formate, methyl acetate, and methyl acetoacetate, and alkyl ethers of polyhydric alcohols such as diethylene glycol monomethyl ether, diethylene glycol monoethyl ether, ethylene glycol monomethyl ether, ethylene glycol monoethyl ether, and dipropylene glycol monomethyl ether. Such hydrophilic organic solvents may be used alone or in combination with two or more kinds thereof. The aqueous solution is preferably a solution in which water alone is used as a solvent.

A viscosity of the aqueous solution is preferably 100 to 2000 mPa·s, more preferably 500 to 1750 mPa·s, and still more preferably 700 to 1500 mPa·s. The viscosity of the aqueous solution in this range may enhance the storage stability of the aqueous solution as well as the coatability of the aqueous solution. The viscosity can be measured in a range of 20 to 30°C and a rotation speed of 0.5 to 10 rpm using, for example, an E-type rotational viscometer.

The aqueous solution according to the present embodiment contains a polymer having a first structural unit derived from (meth)acrylate (monomer A) with two or more hydroxyl groups.

The monomer A is, for example, a compound represented by formula (1) below. The monomer A may be used alone or may be used in combination with two or more kinds thereof. 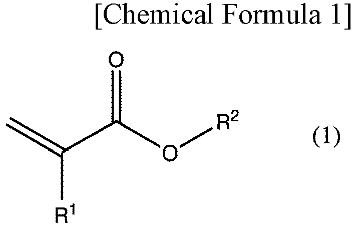 (In formula (1), R¹ represents a hydrogen atom or a methyl group, and R² represents an organic group having two or more hydroxyl groups.)

In formula (1), R² is an organic group having two or more hydroxyl groups, preferably an organic group having two or more hydroxyl groups and 1 to 30 carbon atoms, and more preferably an organic group having two or more hydroxyl groups and 1 to 20 carbon atoms. Examples of such an organic group include an alkyl group having 1 to 20 carbon atoms, a polyoxyalkylene group having 4 to 20 carbon atoms, and an aralkyl group having 7 to 20 carbon atoms. Such organic groups may be linear, branched, or cyclic. Examples of the alkyl group include a methyl group, an ethyl group, a n-propyl group, an i-propyl group, a n-butyl group, a t-butyl group, a n-pentyl group, a n-hexyl group, a cyclopentyl group, and a cyclohexyl group. Examples of the polyoxyalkylene group include a polyoxymethylene group, a polyoxyethylene group, and a polyoxypropylene group. Examples of the aralkyl group include a benzyl group and a phenethyl group. R² may be an organic group containing a functional group other than a hydroxyl group, for example, a halogen atom such as a fluorine atom or a chlorine atom, or a nitrogen atom.

Examples of the monomer A include an ester of a polyhydric alcohol having two or more hydroxyl groups and (meth)acrylic acid, an ester of a saccharide and (meth)acrylic acid, and an ester of a saccharide having an amino group and (meth)acrylic acid. Such esters may be prepared not only by an esterification reaction but also by a transesterification reaction or a ring-opening reaction of a (meth)acrylic acid glycidyl ester.

Examples of the polyhydric alcohol having two or more hydroxyl groups include ethylene glycol, diethylene glycol, triethylene glycol, tetraethylene glycol, polyethylene glycol, propylene glycol, propanediol, glycerin, diglycerin, triglycerin, tetraglycerin, pentaglycerin, hexaglycerin, pentaerythritol, 1,2,6-hexanetriol, 2-hydroxymethyl-2 methyl-1,3-propanediol, and 2-ethyl-2-hydroxymethyl-1,3-propanediol. Examples of the saccharide include monosaccharides such as glucose, mannose, galactose, gulose, fructose, and D-ribose; glucosides, galactosides, and fructosides derived from the monosaccharides; and dimers and trimers thereof. Examples of the saccharide having an amino group include D-glucosamine.

The monomer A is preferably a monomer represented by formula (1A) below from the viewpoint of improving hydrophilicity. 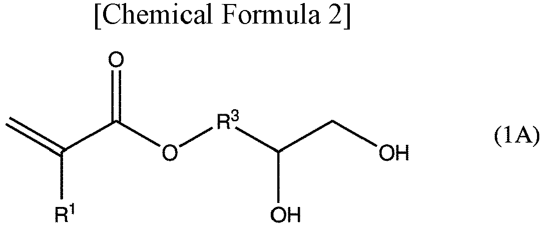 (In formula (1A), R¹ represents a hydrogen atom or a methyl group, and R³ represents an alkylene group having 1 to 4 carbon atoms.)

R³ may be linear, branched, or cyclic. Examples of the alkylene group having 1 to 4 carbon atoms include a methylene group, an ethylene group, an n-propylene group, an i-propylene group, an n-butylene group, an i-butylene group, and a cyclopropylene group.

The monomer represented by formula (1A) is preferably glycerol monoacrylate (R¹ = hydrogen atom, R³ = methylene group) or glycerol monomethacrylate (R¹ = methyl group, R³ = methylene group).

A structural unit derived from the monomer represented by formula (1A) corresponds to a structural unit represented by formula (1A') below. 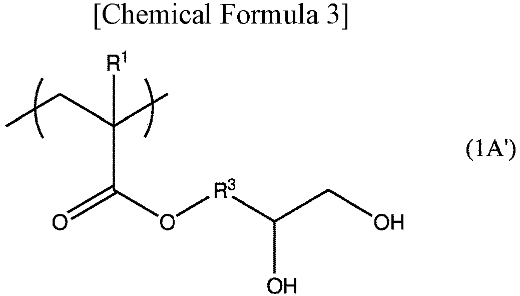 (In formula (1A'), R¹ and R³ have the same meaning as in formula (1A).)

A molecular weight of the monomer A is preferably 500 or less.

The monomer represented by formula (1A) may be a monomer synthesized according to a method of using a monomer having a 1,3-dioxolane structure as a raw material or an intermediate.

The content of the first structural unit derived from the monomer A is 50 mol% or more relative to the total number of moles of each structural unit in the polymer. From the viewpoint of enhancing the storage stability of the aqueous solution, the content of the first structural unit in the polymer is preferably 90 mol% or more, more preferably 99.5 mol% or more, and still more preferably 100 mol%, i.e. a homopolymer.

The polymer may be a copolymer of the first structural unit and a second structural unit derived from a monomer (monomer B) other than the monomer A. The monomer B may be used alone or may be used in combination with two or more kinds thereof.

Examples of the monomer B include, but are not particularly limited to, a (meth)acrylic acid ester, a carboxy group-containing aliphatic monomer, a vinyl ester, an olefin, an N-vinyl compound, and a vinyl ether. Among them, a (meth)acrylic acid ester or a carboxy group-containing aliphatic monomer is preferable, and a (meth)acrylic acid ester or a carboxy group-containing aliphatic monomer having one hydroxy group is more preferable.

Specific examples of the (meth)acrylic acid ester having one hydroxy group include hydroxymethyl (meth)acrylate, hydroxyethyl (meth)acrylate, hydroxypropyl (meth)acrylate, hydroxybutyl (meth)acrylate, hydroxypentyl (meth)acrylate, hydroxyhexyl (meth)acrylate, hydroxyheptyl (meth)acrylate, hydroxyoctyl (meth)acrylate, hydroxynonyl (meth)acrylate, and hydroxydecyl (meth)acrylate.

Specific examples of the (meth)acrylic acid ester other than the (meth)acrylic acid ester having one hydroxy group include methyl (meth)acrylate, ethyl (meth)acrylate, n-propyl (meth)acrylate, isopropyl (meth)acrylate, n-butyl (meth)acrylate, s-butyl (meth)acrylate, t-butyl (meth)acrylate, n-amyl (meth)acrylate, s-amyl (meth)acrylate, t-amyl (meth)acrylate, n-hexyl (meth)acrylate, 2-ethylhexyl (meth)acrylate, isodecyl (meth)acrylate, tridecyl (meth)acrylate, cyclohexyl (meth)acrylate, cyclohexylmethyl (meth)acrylate, octyl (meth)acrylate, lauryl (meth)acrylate, and stearyl (meth)acrylate, benzyl (meth)acrylate, phenyl (meth)acrylate, isobornyl (meth)acrylate, adamantyl (meth)acrylate, tricyclodecanyl (meth)acrylate, 2-ethoxyethyl (meth)acrylate, phenoxyethyl (meth)acrylate, tetrahydrofurfuryl (meth)acrylate, β-methylglycidyl (meth)acrylate, β-ethylglycidyl (meth)acrylate, (3,4-epoxycyclohexyl)methyl (meth)acrylate, and N,N-dimethylaminoethyl (meth)acrylate.

Specific examples of the carboxy group-containing aliphatic monomer include (meth)acrylic acid, maleic acid, fumaric acid, crotonic acid, itaconic acid, citraconic acid, maleic anhydride, maleic acid monomethyl ester, maleic acid monobutyl ester, itaconic acid monomethyl ester, itaconic acid monobutyl ester, and vinylbenzoic acid.

Specific examples of the vinyl ester include vinyl acetate and vinyl propionate.

Specific examples of the olefin include vinyl chloride, vinylidene chloride, ethylene, propylene, butene, and isoprene.

Specific examples of the N-vinyl compound include N-vinylformamide, N-vinylacetamide, and N-vinylpyrrolidone.

Specific examples of the vinyl ether include methyl vinyl ether, ethyl vinyl ether, and propyl vinyl ether.

The content of the second structural unit derived from the monomer B may be 50 mol% or less relative to the total number of moles of each structural unit in the copolymer. From the viewpoint of increasing the pH of the aqueous solution and enhancing the storage stability, the content of the second structural unit in the copolymer is preferably 10 mol% or less, and more preferably 0.5 mol% or less.

The weight average molecular weight of the polymer is 300000 or more. From the viewpoint of improving coating properties of the aqueous solution, the weight average molecular weight is preferably 400000 to 2000000, more preferably 450000 to 1500000, and still more preferably 500000 to 700000. The aqueous solution of the present disclosure has high storage stability even when the weight average molecular weight of the polymer is relatively large. The weight average molecular weight can be measured by gel permeation chromatography (GPC), for example, under conditions described in Examples.

When the polymer is dissolved in water to form a 2 mass% aqueous solution, the pH is 3.5 or more. From the viewpoint of enhancing the storage stability of the aqueous solution, the pH of the 2 mass% aqueous solution is more preferably 3.6 or more, and still more preferably 3.65 or more. The pH in this range may enhance the storage stability of the aqueous solution. When the pH is below 3.5, the polymer in the aqueous solution tends to react during storage, resulting in an increase in the weight average molecular weight of the polymer and poor storage stability. The upper limit of the pH is not particularly limited, but may be, for example, 4.5 or less.

The polymer can be produced by appropriately selecting the above-described monomer to carry out a polymerization reaction. A preferred amount of the monomer used in the polymerization reaction is the same as the preferred content of the structural units derived from such monomers in the copolymer.

An example of the polymerization reaction will be described below. The polymerization reaction is preferably carried out in the presence of a polymerization initiator. The polymerization initiator is preferably hydrogen peroxide; persulfates such as sodium persulfate, potassium persulfate, and ammonium persulfate; azo-based compounds such as dimethyl 2,2'-azobis(2-methylpropionate) and 2,2'-azobis(isobutyronitrile); or organic peroxides such as benzoyl peroxide, peracetic acid, and di-t-butyl peroxide, for example. Such polymerization initiators may be used alone or in the form of a mixture of two or more.

An amount of the polymerization initiator used is preferably 0.01 to 4.0 mass%, and more preferably 0.03 to 2.0 mass%, relative to the total amount of the monomers used in the polymerization reaction.

The polymerization reaction may be carried out without using a solvent, but it is preferable to use a solvent. Examples of the solvent include water, acetonitrile, tetrahydrofuran, dioxane, acetone, methyl ethyl ketone, methyl isobutyl ketone, methanol, ethanol, and isopropyl alcohol, and water is preferable from the viewpoint of preventing environmental pollution and the like. Such solvents may be used alone or in the form of a mixture of two or more. An amount of the solvent used is preferably 40 to 250 parts by mass per100 parts by mass of the monomer used in the polymerization reaction.

In general, the polymerization reaction is preferably carried out at 0°C or higher and preferably at 150°C or lower. The temperature is more preferably 40°C or higher, even more preferably 60°C or higher, and particularly preferably 80°C or higher. The temperature is more preferably 120°C or lower, and still more preferably 110°C or lower. The polymerization temperature does not always need to be kept almost constant during the polymerization reaction, but may be varied (heated or cooled) once or more times. The polymerization reaction may be carried out under any condition of normal pressure, applied pressure, or reduced pressure.

In the polymerization reaction, the monomer, the polymerization initiator, and the like may each be added to a reactor collectively or may be added sequentially or continuously.

A method for producing a polymer may include steps other than the polymerization reaction step. Examples of the other steps include an aging step, a neutralization step, a deactivation step of a polymerization initiator or a chain transfer agent, a dilution step, a drying step, a concentration step, and a purification step.

The polymer obtained by the above-described production method can be diluted with a solvent to obtain an aqueous solution. A method of adjusting the pH of the aqueous solution is not particularly limited, and the pH can be adjusted according to, for example, a ratio of acidic groups in the monomer during the polymerization reaction, the concentration of an acid catalyst, and the selection of the polymerization initiator or the chain transfer agent.

A monomer composition according to the present embodiment contains 50 mol% or more of glycerol mono(meth)acrylate, wherein a content of acrylic acid is less than 200 ppm by mass based on a total amount of glycerol mono(meth)acrylate. The aqueous solution of the polymer obtained from the monomer composition has better storage stability because the content of impurities is reduced. The content of acrylic acid is preferably 150 ppm by mass or less, and more preferably 100 ppm by mass or less, based on the total amount of glycerol mono(meth)acrylate. The aqueous solution of the polymer obtained from the monomer composition has even better storage stability because the content of impurities is further reduced. The content of acrylic acid can be measured using, for example, gas chromatography or high-performance liquid chromatography.

In the monomer composition, the peak area of glyceryl di(meth)acrylate determined by HPLC measurement at a detection wavelength of 210 nm may be less than 1% based on a peak area of the glycerol mono(meth)acrylate determined by HPLC measurement. A polymer obtained from a monomer composition containing a large amount of glyceryl di(meth)acrylate has an increased molecular weight and tends to gel. Therefore, the aqueous solution of the polymer obtained from the monomer composition in which the peak area of glyceryl di(meth)acrylate is less than 1% based on the peak area of glycerol mono(meth)acrylate has even better storage stability.

The peak area of glyceryl di(meth)acrylate determined by HPLC measurement at a detection wavelength of 210 nm is preferably 0.9% or less, and more preferably 0.5% or less based on the peak area of the glycerol mono(meth)acrylate determined by HPLC measurement. The aqueous solution of the polymer obtained from the above monomer composition has even better storage stability.

A moisture content in the monomer composition is preferably 10 to 0.01 mass%, more preferably 5 to 0.01 mass%, and still more preferably 3 to 0.01 mass%. The moisture content in this range can suppress hydrolysis of glycerol mono(meth)acrylate, thereby improving the storage stability of the monomer composition. The moisture content can be measured, for example, by the method described in Examples.

A method for producing the monomer composition according to the present embodiment includes bringing a composition containing glycerol mono(meth)acrylate into contact with at least one selected from the group consisting of a basic ion exchange resin and a chelating resin to reduce the content of the acrylic acid. Thus, the content of acrylic acid can be less than 200 ppm by mass based on the total amount of glycerol mono(meth)acrylate.

As the basic ion exchange resin, for example, "Amberlite 96 SB" (trade name) manufactured by ORGANO CORPORATION can be used. As the chelating resin, for example, "DIAION CR-20" (trade name) manufactured by Mitsubishi Chemical Corporation can be used.

When the composition containing glycerol mono(meth)acrylate is brought into contact with a basic ion exchange resin or a chelating resin, the amount of the resin used is preferably 60 to 5 mass%, more preferably 50 to 10 mass%, and still more preferably 40 to 15 mass% relative to the total mass of the resin and the glycerol mono(meth)acrylate. The amount of the resin used within the above range can further reduce acrylic acid while suppressing the formation of side reactants such as diacrylate in the monomer composition.

When the composition containing glycerol mono(meth)acrylate is brought into contact with a basic ion exchange resin or a chelating resin, the content of acrylic acid can be reduced to less than 200 ppm by mass based on the total amount of glycerol mono(meth)acrylate. The aqueous solution of the polymer obtained from the monomer composition has better storage stability because the content of impurities is reduced. The content of acrylic acid may be 150 ppm by mass or less or may be 100 ppm by mass or less, based on the total amount of glycerol mono(meth)acrylate. The aqueous solution of the polymer obtained from the monomer composition has even better storage stability because the content of impurities is further reduced.

When the composition containing glycerol mono(meth)acrylate is brought into contact with the basic ion exchange resin and the chelating resin, a mixture of the glycerol mono(meth)acrylate and the resin may be stirred in order to promote adsorption of acrylic acid to the resin. The temperature at the time of stirring may be at room temperature or may be at 10°C or lower.

In a method for producing a polymer according to the present embodiment, the above-described monomer composition is polymerized in an aqueous solvent to obtain a polymer. The polymerization reaction can be carried out by the same procedure as the polymerization reaction described above. An aqueous solution of a polymer containing such a polymer has even better storage stability.

In the aqueous solution according to the present embodiment, a polymer obtained by polymerizing the above-described monomer composition is adjusted to a concentration of 35 mass% or less according to an appropriate method such as concentration and dilution as necessary. The aqueous solution of such a polymer has better storage stability. The lower limit of the concentration of the polymer is not particularly limited, but may be, for example, 5 mass% or more from the viewpoint of improving the handleability.

Since the aqueous solution according to the present embodiment described above is excellent in storage stability, it can be stored for a long period of time without changing the properties of the polymer. Therefore, the aqueous solution can be suitably used as a thickener. In addition, the aqueous solution can be suitably used as a coating agent that imparts hydrophilicity to the surface, and is suitable for surface treatment of medical devices and medical instruments, and surface treatment of articles such as ships, underwater structures, fishing nets, fishing gear, pipes, water channels, and water intake facilities. When the surface is coated, the entire surface may be coated, or only a part of the surface may be coated.

Examples of the medical devices include a blood filter, a catheter, and a stent. Since the medical devices come into contact with biological tissues such as blood and cells during use, it is preferable to impart hydrophilicity to the surface using the coating agent.

Although the aqueous solution according to the embodiments of the present disclosure has been described above, the present disclosure is not limited to the above embodiments at all. For example, additives such as an emulsifier, a dispersant, a stabilizer, and a solubilizing agent may be contained in the aqueous solution as long as the properties of the aqueous solution are not impaired.

### Examples

Hereinafter, the present invention will be described in detail with reference to Examples, but the present invention is not limited only to these Examples.

### [Synthesis of Glycerol Monoacrylate (GLMA)]

A gas introduction tube, a thermometer, a cooling tube, and a distilling head connected to a distillate receiver were attached to a reaction vessel containing a stirrer, 230 g of methyl acrylate and 70 g of 2,2-dimethyl-1,3-dioxolane-4-methanol (DOM) were charged, the reaction solution was stirred while an oxygen/nitrogen mixed gas (oxygen concentration: 7 vol%) was blown through the gas introduction tube, and heating was started in an oil bath (bath temperature: 110°C). After water stopped coming out of the distillate, 4.5 g of titanium tetraisopropoxide was added to the reaction vessel to initiate a transesterification reaction. An area ratio of isopropylideneglyceryl acrylate (iPGLMA)/DOM was tracked by gas chromatography (GC) analysis while azeotropically distilling off generated methanol with methyl acrylate. Upon confirmation that the area ratio of iPGLMA/DOM exceeded 9/1 by GC analysis after 7 hours from the start of the reaction, the reaction was terminated to allow the reaction solution to cool to room temperature. To the reaction solution were added 150 g of purified water and 300 g of ethyl acetate as an extraction solvent, and the mixture was stirred for 10 minutes. The precipitate of titanium oxide generated by hydrolysis of a catalyst was removed by suction filtration, and the resulting filtrate was transferred to a separatory funnel to separate an organic layer and an aqueous layer. The organic layer was washed with purified water twice, then transferred to a rotary evaporator, and the remaining methyl acrylate and low-boiling components were distilled off to obtain 96 g of iPGLMA.

A gas introduction tube was provided in a recovery flask equipped with a stirrer, 160 ml of purified water and 80 g of iPGLMA were added and dissolved, then 8 g of solid acid catalyst Amberlyst 15Jwet (manufactured by ORGANO CORPORATION) that had been immersed in water in advance and air-dried was added, and the reaction solution was stirred while an oxygen/nitrogen mixed gas (oxygen concentration: 7 vol%) was blown through the gas introduction tube to initiate a deprotection reaction at room temperature. The area ratio of GLMA/iPGLMA was tracked by GC analysis to confirm that the area ratio exceeded 99/1, and the reaction was terminated after 24 hours. The filtrate obtained by filtering off the solid acid catalyst was washed with n-hexane to remove unreacted iPGLMA. The aqueous layer was concentrated under reduced pressure to obtain 53 g of the desired GLMA.

### [Synthesis of GLMA Homopolymer (PGLMA-1) and Preparation of Aqueous Solution]

### (Example 1, Example 2, and Comparative Example 1)

A gas introduction tube, a thermometer, and a cooling tube were attached to a reaction vessel containing a stirrer, 21.0 g of GLMA as a monomer and 123.0 g of ion-exchanged water as a solvent were charged, and the temperature was raised to 98°C while nitrogen gas was allowed to flow. A solution prepared by dissolving 0.021 g of an azo-based radical polymerization initiator (Manufactured by FUJIFILM Wako Pure Chemical Corporation, trade name: VA086) in 1.0 g of ion-exchanged water was fed to initiate a polymerization reaction. The reaction was continued for 8 hours while keeping the temperature at 100°C or higher, during which a solution prepared by dissolving 0.021 g of VA086 in 1.0 g of ion-exchanged water was fed after 4 hours and 6 hours from the start of the reaction, respectively. The resulting polymer had a weight average molecular weight (in terms of standard polystyrene) of 577000 as measured by GPC. The resulting polymerization liquid was concentrated using an evaporator and diluted with ion-exchanged water to prepare aqueous solutions having a polymer concentration of 20 mass% (Example 1), 30 mass% (Example 2), or 40 mass% (Comparative Example 1), respectively.

### [Synthesis of GLMA Homopolymer (PGLMA-2) and Preparation of Aqueous Solution]

### (Example 3)

A gas introduction tube, a thermometer, and a cooling tube were attached to a reaction vessel containing a stirrer, 15.0 g of GLMA as a monomer and 132.0 g of ion-exchanged water as a solvent were charged, and the temperature was raised to 98°C while nitrogen gas was allowed to flow. A solution prepared by dissolving 0.015 g of an azo-based radical polymerization initiator (Manufactured by FUJIFILM Wako Pure Chemical Corporation, trade name: VA086) in 1.0 g of ion-exchanged water was fed to initiate a polymerization reaction. The reaction was continued for 8 hours while keeping the temperature at 100°C or higher, during which a solution prepared by dissolving 0.015 g of VA086 in 1.0 g of ion-exchanged water was fed after 4 hours and 6 hours from the start of the reaction, respectively. The resulting polymer had a weight average molecular weight (in terms of standard polystyrene) of 340000 as measured by GPC. The resulting polymerization liquid was concentrated using an evaporator and diluted with ion-exchanged water to prepare an aqueous solution having a polymer concentration of 20 mass% (Example 3).

### [Synthesis of GLMA Homopolymer (PGLMA-3) and Preparation of Aqueous Solution]

### (Example 4)

A gas introduction tube, a thermometer, and a cooling tube were attached to a reaction vessel equipped with a stirrer, 20.0 g of GLMA as a monomer and 79.0 g of ion-exchanged water as a solvent were charged, and the temperature was raised to 98°C while nitrogen gas was allowed to flow. A solution prepared by dissolving 0.006 g of an azo-based radical polymerization initiator (Manufactured by FUJIFILM Wako Pure Chemical Corporation, trade name: VA086) in 1.0 g of ion-exchanged water was fed to initiate a polymerization reaction. While the temperature was kept at 100°C or higher, 40.0 g of GLMA was added dropwise over 2 hours from 1 hour after the start of the reaction, and at the same time, a solution prepared by dissolving 0.036 g of VA086 in 160.0 g of ion-exchanged water was added dropwise over 3 hours from 1 hour after the start of the reaction. The reaction was continued for 8 hours. The resulting polymer had a weight average molecular weight (in terms of standard polystyrene) of 1230000 as measured by GPC. The concentration of the polymer in the resulting polymer solution was 20 mass% (Example 4).

### [Synthesis of Copolymer and Preparation of Aqueous Solution]

### (Example 5)

Under the same conditions as in the synthesis method of Example 1 except that 17.91 g of GLMA and 0.09 g of acrylic acid (hereinafter referred to as AA) were used as monomers to be fed, a GLMA/AA copolymer-1, in which the molar ratio of GLMA to AA was 99.5 : 0.5, was obtained. The weight average molecular weight was 546000. The GLMA/AA copolymer-1 was concentrated using an evaporator and diluted with ion-exchanged water to prepare an aqueous solution having a polymer concentration of 20 mass% (Example 5).

### (Comparative Example 2 and Comparative Example 3)

Under the same conditions as in the synthesis method of Example 1 except that 17.73 g of GLMA and 0.09 g of AA were used as monomers to be fed, a GLMA/AA copolymer-2, in which the molar ratio of GLMA to AA was 98.5 : 1.5, was obtained. The weight average molecular weight was 584000. The GLMA/AA copolymer-2 was concentrated using an evaporator and diluted with ion-exchanged water to prepare aqueous solutions having a polymer concentration of 20 mass% (Comparative Example 2) and 30 mass% (Comparative Example 3).

### <Evaluation Method>

### [Measurement of Weight Average Molecular Weight (Mw)]

The resulting polymer was dissolved and diluted with N,N-dimethylformamide (containing 10 mM lithium bromide), filtered through a filter having a pore diameter of 0.45 µm (chromatography disk non-aqueous type, manufactured by KURABO INDUSTRIES LTD.), and measured by gel permeation chromatography (GPC) to determine a weight average molecular weight of the polymer. The conditions of GPC are shown below.
Apparatus: HLC-8320GPC (manufactured by Tosoh Corporation)
Elution solvent: N,N-dimethylformamide (containing 10 mM lithium bromide)
Flow rate of elution solvent: 0.6 mL/min
Standard substance: standard polystyrene (manufactured by Tosoh Corporation)
Separation column: 2 TSKgel AWM-H (manufactured by Tosoh Corporation) in series

### [Measurement of pH]

The resulting polymer was diluted with ion-exchanged water to prepare an aqueous solution having a polymer concentration of 2 mass%. The pH of the prepared aqueous solution was measured at a temperature of 23 to 26°C using a pH meter (LAQUA, manufactured by HORIBA, Ltd.). The results are shown in Table 1.

### [Viscosity Measurement]

Using an E-type viscometer (TV-20, cone No. 1, manufactured by Toki Sangyo Co., Ltd.), the viscosity of 1.5 mL of each aqueous solution of the Examples and Comparative Examples was measured at 25°C and 0.5 to 10 rpm. The results are shown in Table 1.

### [Storage Stability Evaluation]

In a glass sample tube, 10 g of each of the aqueous solutions of Examples and Comparative Examples was sealed and stored in a circulation type thermostat set at 50°C for 3 weeks. The Mw of the polymer after storage was measured by GPC. The measurement conditions for GPC were the same as those described above. As a result of GPC, an increase rate of Mw of 1.10 or less before and after the storage stability evaluation at 50°C for 3 weeks was evaluated as "∘", an increase rate of Mw of more than 1.10 and less than 1.19 was evaluated as "△", and an increase rate of Mw of 1.19 or more was evaluated as "×". The results are shown in Table 1.

**[Table 1]**

| | Example 1 | Example 2 | Comparative Example 1 | Example 3 | Example 4 | Example 5 | Comparative Example 2 | Comparative Example 3 |
|---|---|---|---|---|---|---|---|---|
| Polymer | PGLMA -1 | PGLMA -1 | PGLMA -1 | PGLMA -2 | PGLMA -3 | Copolymer -1 | Copolymer-2 | Copolymer-2 |
| Mw | 577000 | 577000 | 577000 | 340000 | 1230000 | 546000 | 584000 | 584000 |
| pH | 3.87 | 3.87 | 3.87 | 3.71 | 3.69 | 3.67 | 3.34 | 3.34 |
| Concentration of aqueous solution (mass%) | 20 | 30 | 40 | 20 | 20 | 20 | 20 | 30 |
| Viscosity (mPa·s) | 198 | 1466 | Unmeasurable | 65.5 | 810 | 209 | 187 | 1323 |
| Rotation speed in viscosity measurement (rpm) | 5 | 0.5 | - | 10 | 1 | 5 | 5 | 0.5 |
| Increase rate of Mw due to storage safety evaluation | 1.04 | 1.05 | 1.19 | 1.06 | 1.10 | 1.12 | 1.29 | 1.21 |
| Storage stability evaluation | ○ | ○ | × | ○ | ○ | △ | × | × |

### (Example 6)

### [Synthesis of GLMA]

A gas introduction tube, a thermometer, a cooling tube, and a distilling head connected to a distillate receiver were attached to a reaction vessel containing a stirrer, 230 g of methyl acrylate and 70 g of 2,2-dimethyl-1,3-dioxolane-4-methanol (DOM) were charged, the reaction solution was stirred while an oxygen/nitrogen mixed gas (oxygen concentration: 7 vol%) was blown through the gas introduction tube, and heating was started in an oil bath (bath temperature: 110°C). After water stopped coming out of the distillate, 4.5 g of titanium tetraisopropoxide was added to the reaction vessel to initiate a transesterification reaction. An area ratio of iPGLMA (isopylideneglyceryl acrylate)/DOM was tracked by gas chromatography (GC) analysis while azeotropically distilling off generated methanol with methyl acrylate. Upon confirmation that the area ratio of iPGLMA/DOM exceeded 9/1 by GC analysis after 7 hours from the start of the reaction, the reaction was terminated to allow the reaction solution to cool to room temperature. To the reaction solution were added 150 g of purified water and 300 g of ethyl acetate as an extraction solvent, and the mixture was stirred for 10 minutes. The precipitate of titanium oxide generated by hydrolysis of a catalyst was removed by suction filtration, and the filtrate was transferred to a separatory funnel to separate an organic layer and an aqueous layer. The organic layer was washed with purified water twice and then transferred to a rotary evaporator, and remaining methyl acrylate and low-boiling components were distilled off to obtain 96 g of iPGLMA.

A gas introduction tube was provided in a recovery flask equipped with a stirrer, 160 ml of purified water and 80 g of iPGLMA were added and dissolved, then 8 g of solid acid catalyst Amberlyst 15Jwet (manufactured by ORGANO CORPORATION) that had been immersed in water in advance and air-dried was added, and the reaction solution was stirred while an oxygen/nitrogen mixed gas (oxygen concentration: 7 vol%) was blown through the gas introduction tube to initiate a deprotection reaction at 60°C. The reaction was terminated after 2 hours, and it was confirmed by GC analysis that the area ratio of GLMA/iPGLMA exceeded 99/1. To a filtrate obtained by filtering off the solid acid catalyst was added 40 g of n-heptane, and unreacted substances and the like were extracted and washed twice using a separatory funnel.

### [Removal of Acrylic Acid]

The resulting aqueous layer was immersed in an ice bath and cooled to 10°C or lower, 24 g of a chelating resin ("DIAION CR -20" manufactured by Mitsubishi Chemical Corporation), which had washed with ion-exchanged water in advance, was added as a wet weight, and the mixture was stirred for 1 hour while maintaining a temperature of 10°C or lower. Thereafter, the chelating resin was removed by filtration, and microfiltration was further performed using a filter having a pore size of 0.5 µm to remove fine powder of the chelating resin. To the resulting liquid was added 0.3 g of a 1% aqueous solution of 4H-TEMPO as a polymerization inhibitor, and the pressure was reduced to 10 torr or less while heating in a warm bath at 50°C using an evaporator to distill off moisture and the like under reduced pressure, thereby obtaining a GLMA monomer.

### [Synthesis of GLMA Homopolymer (PGLMA-4) and Preparation of Aqueous Solution]

A gas introduction tube, a thermometer, and a cooling tube were attached to a reaction vessel containing a stirrer, 26.0 g of GLMA as a monomer and 171.0 g of ion-exchanged water as a solvent were charged, and the temperature was raised to 99°C while nitrogen gas was allowed to flow. A solution prepared by dissolving 0.026 g of an azo-based radical polymerization initiator (Manufactured by FUJIFILM Wako Pure Chemical Corporation, trade name: VA086) in 1.0 g of ion-exchanged water was fed to initiate a polymerization reaction. The reaction was continued for 8 hours while keeping the temperature at 100°C or higher, during which a solution prepared by dissolving 0.026 g of VA086 in 1.0 g of ion-exchanged water was fed after 4 hours and 6 hours from the start of the reaction, respectively. The resulting aqueous polymer solution was concentrated under reduced pressure in a warm bath at 50°C using an evaporator to obtain a polymer solution having a polymer concentration of 30%.

### (Example 7)

### [Removal of Acrylic Acid]

GLMA was synthesized by the same procedure as in Example 6. To the resulting aqueous layer was added, as a wet weight, 8 g of a weakly basic ion exchange resin (Amberlite 96SB, manufactured by ORGANO CORPORATION), which had been washed with ion-exchanged water in advance, and the mixture was stirred at room temperature for 2 hours. Thereafter, Amberlite was removed by filtration, and microfiltration was further performed using a filter having a pore size of 0.5 µm to remove the fine powder of Amberlite. To the resulting liquid was added 0.3 g of a 1% aqueous solution of 4H-TEMPO as a polymerization inhibitor, and the pressure was reduced to 10 torr or less while heating in a warm bath at 50°C using an evaporator to distill off moisture and the like under reduced pressure, thereby obtaining a GLMA monomer.

### [Synthesis of GLMA Homopolymer (PGLMA-5) and Preparation of Aqueous Solution]

A gas introduction tube, a thermometer, and a cooling tube were attached to a reaction vessel containing a stirrer, 26.0 g of GLMA as a monomer and 171.0 g of ion-exchanged water as a solvent were charged, and the temperature was raised to 99°C while nitrogen gas was allowed to flow. A solution prepared by dissolving 0.026 g of an azo-based radical polymerization initiator (Manufactured by FUJIFILM Wako Pure Chemical Corporation, trade name: VA086) in 1.0 g of ion-exchanged water was fed to initiate a polymerization reaction. The reaction was continued for 8 hours while keeping the temperature at 100°C or higher, during which a solution prepared by dissolving 0.026 g of VA086 in 1.0 g of ion-exchanged water was fed after 4 hours and 6 hours from the start of the reaction, respectively. The resulting aqueous polymer solution was concentrated under reduced pressure in a warm bath at 50°C using an evaporator to obtain a polymer solution having a polymer concentration of 30%.

### (Example 8)

### [Removal of Acrylic Acid]

GLMA was synthesized by the same procedure as in Example 6. To the resulting aqueous layer was added 0.3 g of a 1% aqueous solution of 4H-TEMPO as a polymerization inhibitor, and the pressure was reduced to 10 torr or less while heating in a warm bath at 50°C using an evaporator to distill off moisture and the like under reduced pressure, thereby obtaining a GLMA monomer.

### [Synthesis of GLMA Homopolymer (PGLMA-6) and Preparation of Aqueous Solution]

A gas introduction tube, a thermometer, and a cooling tube were attached to a reaction vessel containing a stirrer, 26.0 g of GLMA as a monomer and 171.0 g of ion-exchanged water as a solvent were charged, and the temperature was raised to 99°C while nitrogen gas was allowed to flow. A solution prepared by dissolving 0.026 g of an azo-based radical polymerization initiator (Manufactured by FUJIFILM Wako Pure Chemical Corporation, trade name: VA086) in 1.0 g of ion-exchanged water was fed to initiate a polymerization reaction. The reaction was continued for 8 hours while keeping the temperature at 100°C or higher, during which a solution prepared by dissolving 0.026 g of VA086 in 1.0 g of ion-exchanged water was fed after 4 hours and 6 hours from the start of the reaction, respectively. The resulting aqueous polymer solution was concentrated under reduced pressure in a warm bath at 50°C using an evaporator to obtain a polymer solution having a polymer concentration of 30%.

### <Evaluation Method>

### [Measurement of Acrylic Acid]

In Examples 6 to 8, the resulting GLMA was subjected to gas chromatography to determine the content of acrylic acid. The results are shown in Table 2.

### [Measurement of Moisture]

In Examples 6 to 8, the moisture content of the resulting GLMA was measured using a moisture meter (trade name "MKV -710 (manufactured by Kyoto Electronics Manufacturing Co., Ltd.)"). The results are shown in Table 2.

### [Measurement of Ratio of Peak Area of Glyceryl Diacrylate (GLDA) to Peak Area of GLMA]

In Examples 6 to 8, the resulting GLMA was diluted 30 times with a developing solution of HPLC (high performance liquid chromatograph), and filtered through a filter having a pore diameter of 0.45 µm, and then measured by HPLC. HPLC measurement conditions are shown below.
Apparatus: Prominence (Shimadzu Corporation)
Column: CAPCELPAK ADME 4.6 mm I.D. × 250 mm (Shiseido Company, Limited)
Column temperature: 40°C
Mobile phase A: Acetonitrile
Mobile phase B: 10 mM phosphoric acid solution
B-Concentration: 80%
Flow rate: 0.5 mL/min
Detection: UV (210 nm)

Since the isomers (1,3-GLMA and 2,3-GLMA) were detected as peaks with retention times of 4.7 minutes and 5.0 minutes, the peak area of GLMA was defined as the sum of the areas of these two peaks. GLDA was detected as a peak with a retention time of 16.8 minutes. The ratio of the peak area at 16.8 minutes to the sum of the peak areas at 4.7 minutes and 5.0 minutes was taken as an evaluation value of the GLDA content. The results are shown in Table 2. In Example 8, a peak with a retention time of 16.8 minutes was not observed, and thus it was described as ND in Table 2.

### <Evaluation of Polymer and Aqueous Solution of Polymer>

The weight average molecular weight, pH, and viscosity of the polymers of Examples 6 to 8 were measured by the same procedure as that of Example 1. The results are shown in Table 3.

### [Storage Stability Test]

Storage stability tests at 60°C were conducted for Example 1, Example 2, Example 4, Example 6, Example 7, and Example 8. The storage periods were 10 days, 20 days, 30 days, and 50 days. In the measurement of GPC described above, Mw before and after the storage stability test was determined to calculate an increase rate of Mw after the storage stability test. The increase rate of Mw is shown in Table 3.

**[Table 2]**

| | Example 6 | Example 7 | Example 8 |
|---|---|---|---|
| Acrylic acid removal process | Chelating resin | Weakly basic ion exchange resin | None |
| Content of acrylic acid (ppm by mass) | 89 | 70 | 1600 |
| Peak area of GLDA (%) relative to peak area of GLMA | 0.002 | 0.009 | ND |
| Moisture content (mass%) | 1.12 | 1.50 | 1.70 |

**[Table 3]**

| | Example 1 | Example 2 | Example 4 | Example 6 | Example 7 | Example 8 |
|---|---|---|---|---|---|---|
| Polymer | PGLMA -1 | PGLMA -1 | PGLMA -3 | PGLMA -4 | PGLMA -5 | PGLMA -6 |
| Mw | 577000 | 577000 | 1230000 | 489685 | 510604 | 552000 |
| pH | 3.87 | 3.87 | 3.69 | 3.87 | 4.37 | 3.60 |
| Concentration of aqueous solution (mass%) | 20 | 30 | 20 | 30 | 30 | 30 |
| Viscosity (mPa·s) | 198 | 1466 | 810 | 1212 | 1708 | 1860 |
| Increase rate of Mw due to storage safety evaluation at 60°C for 10 days | 1.01 | 1.05 | - | - | - | 1.05 |
| Increase rate of Mw due to storage safety evaluation at 60°C for 20 days | 1.1 | 1.2 | - | - | - | 1.2 |
| Increase rate of Mw due to storage safety evaluation at 60°C for 30 days | 1.2 | 1.4 | 1.2 | - | - | 1.4 |
| Increase rate of Mw due to storage safety evaluation at 60°C for 50 days | 1.4 | Gelation | Gelation | 1.05 | 1.1 | Gelation |

As shown in Tables 2 and 3, the aqueous solution of the polymer prepared by polymerizing GLMA with reduced acrylic acid had further improved storage stability compared to the aqueous solution of the polymer prepared by polymerizing GLMA without reduced acrylic acid.

## Claims

1. An aqueous solution comprising:
a polymer containing 50 mol% or more of a structural unit derived from (meth)acrylate with two or more hydroxyl groups and having a weight average molecular weight of 300000 or more at a concentration of 35 mass% or less, wherein
when the polymer is dissolved in water to form a 2 mass% aqueous solution, the aqueous solution has a pH of 3.5 or more.

2. The aqueous solution according to claim 1, wherein the structural unit derived from (meth)acrylate includes a structural unit derived from glycerol mono(meth)acrylate.

3. The aqueous solution according to claim 2, wherein the polymer is a homopolymer of a structural unit derived from the glycerol mono(meth)acrylate.

4. The aqueous solution according to any one of claims 1 to 3, wherein the polymer has a weight average molecular weight of 400000 to 2000000.

5. A monomer composition comprising:
50 mol% or more of glycerol mono(meth)acrylate, wherein
a content of acrylic acid is less than 200 ppm by mass based on a total amount of glycerol mono(meth)acrylate.

6. The monomer composition according to claim 5, wherein a peak area of glyceryl di(meth)acrylate determined by HPLC measurement at a detection wavelength of 210 nm is less than 1% based on a peak area of the glycerol mono(meth)acrylate determined by HPLC measurement.

7. A method for producing the monomer composition according to claim 5 or 6, the method comprising:
bringing a composition containing glycerol mono(meth)acrylate into contact with at least one selected from the group consisting of a basic ion exchange resin and a chelating resin to reduce the content of the acrylic acid.

8. A method for producing a polymer, the method comprising: polymerizing the monomer composition according to claim 5 in an aqueous solvent to obtain a polymer.

9. The aqueous solution according to any one of claims 1 to 3, comprising a polymer obtained by the production method according to claim 8.
